Europäisches Patentamt

European Patent Office

Office européen des brevets

Publication number: **0 291 108**
**A1**

# EUROPEAN PATENT APPLICATION

Application number: **88200765.1**

Int. Cl.⁴ **C04B 40/00**

Date of filing: **21.04.88**

Priority: **15.05.87 IT 2053087**

Date of publication of application:
**17.11.88 Bulletin 88/46**

Designated Contracting States:
**AT BE CH DE ES FR GB GR LI LU NL SE**

Applicant: SNAMPROGETTI S.p.A.
Corso Venezia 16
I-20121 Milan(IT)

Inventor: Lagana, Vincenzo
Via Sismondi 43
I-20133 Milan(IT)
Inventor: Ercolani, Dario
Via Dante Alighieri 57
I-61032 Fano Pesaro(IT)

Representative: Roggero, Sergio et al
Ing. Barzanò & Zanardo Milano S.p.A. Via
Borgonuovo 10
I-20121 Milano(IT)

## Process for producing high-strength mortar.

Disclosed is a process for producing high-strength mortar by starting from cement, water, sand and/or gravel and at least one additive, with the amount of said additive being comprised within the range of from 0.1% to 1,5 % by weight relatively to cement, which process is characterized in that a portion of cement, comprised within the range of from 20 to 60% of total cement, and possibly a portion of sand and/or gravel not larger than 60% of total sand and/or gravel is submitted to a micronization carried out in the presence of the water and of the additive(s), until a particle top-size not larger than 40 μm is obtained, and that the so-obtained micronized product is blended with the residual portion of cement together with the sand and/or the gravel or with the residual portion thereof.

## "PROCESS FOR PRODUCING HIGH-STRENGTH MORTAR"

The present invention relates to a process for producing high-strength mortar.

It is known that mortar is constituted by water, binding material and filler (sand or gravel).

The mutual proportions of the components of mortar may vary in the composition of this latter, as a function of the desired product type, and the strength of obtained mortar is proportional both to the content of water used when mortar is prepared, and of the type of binding material used and to the granulometry thereof.

The finer the constituting particles, the higher the strength of the product given by the binding material.

To mortar, fluidifying surface-active substances are generally added - with the percentage thereof being of the order of from 0.5 to 1.5% by weight - which make it possible a very flowing and homogeneous material to be obtained, so as to facilitate the compacting during the setting, and help the casting thereof.

As previously said, the lower the porosity and the smaller the water amount used during mortar preparation, the better the mechanical compression strength; however, a minimum threshold value has to be complied with as to water amount, under which mortar is no longer flowing, and is therefore difficult to handle: this drawback cannot be avoided, even if the amount of fluidifier additive is increased.

The present Applicant has surprisingly found now that it is possible to prepare a mortar containing a reduced water amount, while maintaining a high fluidity, and hence high flowing characteristics, with a product being obtained after setting, which is very compact, due to a considerable decrease in porosity, and has a mechanical compression strength which is approximately twice as high as the mechanical compression strength shown by the mortar obtained by means of the processes known from the prior art. This is a considerable technological advantage, which results in a halving of the resisting cross section areas of the structures, or, that is the same, in the use of half-amount of cement with the relevant resisting cross section area being the same.

The object of the present invention is a process for producing high-strength mortar by starting from cement, water, sand and/or gravel, and at least one additive, in an amount comprised within the range of from 0.1 to 1.5% by weight relatively to cement, which process is characterized in that a portion of cement comprised within the range of from 20 to 60%, preferably of from 40 to 50% of total cement, and possibly a portion of sand and/or gravel not larger than 60% of total sand and/or gravel is submitted to a micronization carried out in the presence of the water and of the additive(s), until a particle top-size not larger than 40 $\mu$m, and preferably not larger than 25 $\mu$m, is obtained, and that the so-obtained micronized product is blended with the residual portion of cement together with the sand and/or the gravel or the residual portion thereof.

The additive(s) which can be used in said process is(are) fluidifier surface-active substance(s) known on the market.

For exemplifying purposes, but without limiting the invention, among the various fluidifier surface-active substances which can be used, the following may be mentioned:

- sodium, ammonium, etc., naphthalene-sulphonates;
- sodium lignosulphonates;
- aromatic sulphonates;
- ethoxylated products;
- propoxylated products.

In the process of the invention, any types of cement having a granulometry, expressed as the particle top-size, preferably comprised within the range of from 200 to 500 $\mu$m, can be used.

For exemplifying purposes, but without limiting the invention, the following preferred cements may be mentioned:

- Portland cement;
- pozzuolana cement;
- blast furnace cement.

An example is given now, referring to the hereto attached figure, with the purpose of better explaining the invention, it having to be understood that the same invention is not to be construed as being limited to it, or by it.

Example 1

In order to obtain high-strength mortar, the following products were used as the starting ingredients:

| | |
|---|---|
| (Portland) Cement | 18 kg |
| Water | 14 kg |
| Sand | 67.5 kg |
| Additive | 0.5 kg |
| (sodium naphthalene-sulphonate) | -------- |
| | 100.0 kg |

To a wet-micronizing mill (1) the following stock was fed:

| | | |
|---|---|---|
| Cement | (2) | 6 kg |
| Water | (3) | 14 kg |
| Sand | (4) | 20 kg |
| Additive | (5) | 0.5 kg |
| | | -------- |
| | | 40.5 kg |

From the above, one can see that the whole amount of water and the whole amount of additive were fed to the micronizing mill.

As the product (6) a micronized fluid was obtained, which had an average granulometry of 5 $\mu$m, and a particle top-size not larger than 20 $\mu$m; said micronized fluid was fed to a mixer (7) together with the balance of cement (8) (12 kg) and sand (9) (47.2 kg).

After a suitable mixing for approximately 10 minutes, the end product (10) was obtained, which had the following composition:

| | | |
|---|---|---|
| Cement | | 18 kg |
| Water | | 14 kg |
| Sand | | 67.5 kg |
| Additive | (5) | 0.5 kg |
| | | -------- |
| | | 100 kg |

After setting, this product showed to have a mechanical compression strength of approximately 700 kg/cm$^2$ after 7 days.

(Comparative) Example 2

With the same starting products as of Example 1, a mortar was prepared, without micronizing a portion of cement and a portion of sand; the so-obtained product showed to have, after setting, a mechanical compression strength of approximately 350 kg/cm² after 7 days.

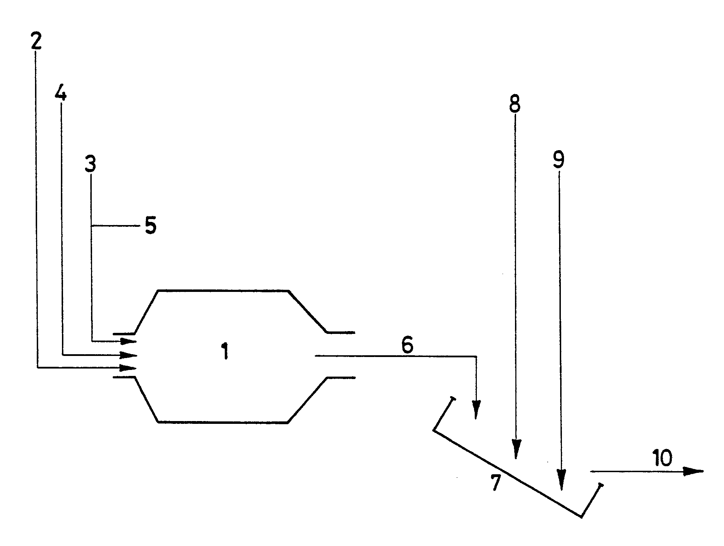

## Claims

1. Process for producing high-strength mortar by starting from cement, water, sand and/or gravel, and at least one additive, with the percentage of said additive being comprised within the range of from 0.1 to 1.5% by weight relatively to cement, characterized in that a portion of cement comprised within the range of from 20 to 60% of total cement, and possibly a portion of sand and/or gravel not larger than 60% of total sand and/or gravel is submitted to a micronization carried out in the presence of the water and of the additive(s), until a particle top-size not larger than 40 μm is obtained, and that the so-obtained micronized product is blended with the residual portion of cement together with the sand and/or the gravel or the residual portion thereof.

2. Process according to claim 1, wherein the cement portion submitted to micronization is comprised within the range of from 40 to 50% of total cement.

3. Process according to claim 1, wherein the micronization of a portion of cement and possibly of a portion of sand and/or gravel is carried out until a top-size not larger than 25 μm is obtained.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | GB-A- 328 030 (J.S. MORGAN) * Claims 1,3; page 2, column 1, lines 56-62 * | 1-3 | C 04 B 40/00 |
| X | CH-A- 444 008 (T. TAKABAYASHI) * Claim; column 2, lines 17-22 * | 1-3 | |
| X | DE-B-1 231 150 (T. TAKABAYASHI) * Claim 1 * | 1-3 | |
| X | US-A-3 331 905 (I.A. HINT) * Claim 18; column 1, lines 16-22; column 2, lines 21-26 * | 1-3 | |

TECHNICAL FIELDS SEARCHED (Int. Cl.4)

C 04 B 40/00

The present search report has been drawn up for all claims

| Place of search | Date of completion of the search | Examiner |
|---|---|---|
| THE HAGUE | 03-08-1988 | HAUCK, H.N. |

EPO FORM 1503 03.82 (P0401)